(19) Europäisches Patentamt
European Patent Office
Office européen des brevets

(11) **EP 2 933 442 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
***F01K 13/00*** *(2006.01)*

(21) Anmeldenummer: **14164959.0**

(22) Anmeldetag: **16.04.2014**

(54) **Vorrichtung und Verfahren zur Erkennung von Leckagen in geschlossenen Kreisprozessen**

Device and method for detecting leaks in closed cycle processes

Dispositif et procédé de reconnaissance de fuites dans des cycles fermés

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2015 Patentblatt 2015/43**

(73) Patentinhaber: **Orcan Energy AG**
**81379 München (DE)**

(72) Erfinder:
• **Grill, Andreas**
 **81667 München (DE)**
• **Springer, Jens-Patrick**
 **81371 München (DE)**
• **Aumann, Richard**
 **80796 München (DE)**
• **Langer, Roy**
 **81371 München (DE)**
• **Gewald, Daniela**
 **83026 Rosenheim (DE)**
• **Schuster, Andreas**
 **86874 Tussenhausen (DE)**

(74) Vertreter: **Grünecker Patent- und Rechtsanwälte PartG mbB**
**Leopoldstraße 4**
**80802 München (DE)**

(56) Entgegenhaltungen:
EP-A1- 2 133 544          WO-A1-2013/057991
DE-A1-102010 054 736    DE-A1-102011 117 054

## Beschreibung

### Gebiet der Erfindung

Die Erfindung betrifft ein Verfahren zum Detektieren einer Leckage in einer thermodynamischen Kreisprozessvorrichtung und eine derartige thermodynamische Kreisprozessvorrichtung, insbesondere eine ORC-Vorrichtung.

### Stand der Technik

In thermodynamischen Kreisprozessen, wie z.B. Kälteprozessen oder auch Kraftwerksprozessen (wie dem ORC) werden üblicherweise Speisebehälter verwendet um Fluid zu bevorraten. Über den Flüssigkeitsspiegel in diesem Speisebehälter kann auf eine Füllmenge des Systems rückgeschlossen werden. Wird im Kreisprozess kein Speisebehälter verwendet, was aus unterschiedlichen Gründen vorteilhaft ist, dann kann der Füllstand des Systems mit herkömmlichen Füllstandsensoren nicht mehr mit der gewünschten Genauigkeit oder nur mit wesentlich kostspieligeren Lösungen ermittelt werden. Dies ist aber notwendig, um auftretende Leckagen zu erkennen, und um entweder bei einem Wartungstermin Arbeitsmedium nachzufüllen oder aber um vorteilhafterweise bereits mit Auftreten einer Leckage Gegenmaßnahmen (eine Wartung) einzuleiten. Außerdem schreiben bestimmte Regelwerke (z.B. Verordnung (EG) Nr. 842/2006 über bestimmte fluorierte Treibhausgase) Systeme zur Leckageerkennung vor.

Ein beispielhaftes System zur Gewinnung von elektrischer Energie aus Wärmeenergie mit dem Organic Rankine Cycle als thermodynamischen Kreisprozess (ORC System) ohne Speisebehälter besteht aus den folgenden Hauptkomponenten: eine Speisepumpe, die flüssiges organisches Arbeitsmedium unter Druckerhöhung zu einem Verdampfer fördert, dem Verdampfer selbst, in dem das Arbeitsmedium unter Zuführung von Wärme verdampft und optional zusätzlich überhitzt wird, eine Expansionsmaschine, in welcher der unter hohem Druck stehende Dampf entspannt wird und dabei mechanische Energie erzeugt, welche über einen Generator zu elektrischer Energie gewandelt wird, und einem Kondensator, in dem der Niederdruckdampf aus der Expansionsmaschine verflüssigt wird. Aus dem Kondensator gelangt das flüssige Arbeitsmedium wieder zur Speisepumpe des Systems, wodurch der thermodynamische Kreislauf geschlossen ist.

Zur Vermeidung von Kavitation in der Pumpe wird das flüssige Arbeitsmedium unterkühlt, also auf eine Temperatur gekühlt, die unterhalb der Kondensationstemperatur (gleichbedeutend mit der Siedetemperatur) bei dem Kondensationsdruck ist. Auf diese Weise wird der für die Pumpe notwendige NPSH Wert (Net Positive Suction Head, Netto-Vorlaufhöhe) erzielt.

Befindet sich kein Füllstandssensor in der Anlage, wird eine Leckage nach dem Stand der Technik im Stillstand über konventionelle Suchmethoden festgestellt (z.B. Kältemitteldetektor oder Leckagesuchspray). Dieses Verfahren ist umständlich und je nach Art des verwendeten Arbeitsmediums ist damit ggf. keine Detektion von Leckage möglich. Weitere Gründe für die mangelnde Umsetzbarkeit der konventionellen Leckagesuchmethoden können in der Art des Arbeitsmediums in Verbindung mit Umgebungs- bzw. Randbedingungen begründet sein. Beispielsweise kann aufgrund des Arbeitsmediums im Stillstand ein Unterdruck im System vorhanden sein, eine Verdünnung des zu detektieren Stoffs bei stark belüfteten Rohrleitungen oder auch isolierte Rohrleitungen können eine Detektion erschweren. Zudem ist es nachteilig, dass eine Leckagedetektion im laufenden Betrieb damit nicht möglich ist.

Die Druckschrifte DE-10 2010 054736 und DE-10 2011 117054 offenbaren konventionelle Suchmethoden, um eine Leckage festzustellen.

## Beschreibung der Erfindung

Aufgabe der Erfindung ist es, ohne einen herkömmlichen Füllstandsensor wie z.B. Schwimmer, kapazitative Sensoren oder Ähnliches einen Hinweis auf die sich aktuell im geschlossenen Kreislauf befindliche Stoffmenge des Arbeitsmediums zu erhalten.

Diese Aufgabe wird gelöst durch ein Verfahren nach Anspruch 1.

Das erfindungsgemäße Verfahren zum Detektieren einer Leckage in einer thermodynamischen Kreisprozessvorrichtung mit einem Kondensator zum Kondensieren von dampfförmigem Arbeitsmedium umfasst die folgenden Schritte: Ermitteln einer Unterkühlung des Arbeitsmediums im Kondensator, wobei die Unterkühlung als Differenz zwischen einer Kondensationstemperatur im Kondensator und einer Temperatur von flüssigem aus dem Kondensator austretenden Arbeitsmedium ermittelt wird; Detektieren einer Leckage falls die ermittelte Unterkühlung von einem Sollwert der Unterkühlung abweicht oder falls eine aus der ermittelten Unterkühlung bestimmte Füllmenge des Arbeitsmediums in der thermodynamischen Kreisprozessvorrichtung von einem Sollwert der Füllmenge abweicht.

Das erfindungsgemäße Verfahren beruht darauf, dass das im Kondensator stehende flüssige Arbeitsmedium (das nach dem Kondensieren aus dem dampfförmigen Zustand bei einem Kondensationsdruck und einer zugehörigen Kondensationstemperatur) im Kondensator durch Kontakt mit den Kühlflächen weiter abgekühlt wird bevor das Arbeitsmedium den Kondensator wieder in Richtung Speisepumpe verlässt. Wenn eine Leckage vorliegt, ändert sich der Flüssigkeitsstand des Arbeitsmediums im Kondensator, insbesondere sinkt der Flüssigkeitsstand bei einem Abnehmen der Füllmenge des Arbeitsmediums, so dass sich die Kontaktfläche zwischen Kondensator und Flüssigkeit ändert, woraus eine geänderte Unterkühlung resultiert. Bei einem Abnehmen der Füllmenge wird sich die Unterkühlung verringern, also der Unterschied zur Kondensationstemperatur wird nicht mehr so groß ausfallen. Somit kann aus der geänderten Unterkühlung auf eine Leckage geschlossen werden. Vorteilhaft ist besonders auch, dass dieses Verfahren während des laufenden Betriebs der Kreisprozessvorrichtung eingesetzt werden kann. Der Schritt des Detektierens bezeichnet das Feststellen der Leckage bzw. die Schlussfolgerung, dass eine Leckage vorliegt.

Das erfindungsgemäße Verfahren kann dahingehend weitergebildet werden, dass die Füllmenge des Arbeitsmediums, insbesondere eine Masse oder ein Volumen des Arbeitsmediums, aus der ermittelten Unterkühlung unter Verwendung einer Relation zwischen Unterkühlung und Füllmenge bestimmt werden kann, wobei die Relation zwischen Unterkühlung und Füllmenge insbesondere ein funktionaler Zusammenhang oder eine tabellarische Zuordnung zwischen Unterkühlung und Füllmenge sein kann.

Eine andere Weiterbildung besteht darin, dass die Kondensationstemperatur aus einem gemessenen Kondensationsdruck bestimmt werden kann. Dies hat den Vorteil, dass die Kondensationstemperatur nicht unmittelbar gemessen werden muss, sondern indirekt aus dem einfacher zu messenden Kondensationsdruck berechnet werden kann. Die Berechnung erfolgt dabei unter Verwendung von medienabhängigen Zusammenhängen von Druck und Temperatur (Zustandsgleichungen), beispielsweise aus Stoffdaten, insbesondere der druckabhängigen Sättigungstemperatur, des jeweiligen Arbeitsmediums.

Gemäß einer anderen Weiterbildung kann der Kondensator senkrecht angeordnete Kondensatorflächen oder um einen Winkel zwischen 0° und 80°, vorzugsweise zwischen 0° und 45°, höchst vorzugsweise zwischen 0° und 30°, gegenüber der Senkrechten geneigte Kondensatorflächen aufweisen, insbesondere kann der Kondensator ein senkrechter Rohrkondensator, ein Microchannel-Kondensator, ein Mini- oder Microtube-Kondensator, oder ein senkrechter Plattenkondensator sein. Für diese Arten von Kondensatoren ist das erfindungsgemäße Verfahren besonders vorteilhaft anzuwenden, da sich die Kontaktfläche zwischen flüssigem Arbeitsmedium und Kondensator bei einer geringen Leckage bereits sehr stark ändert und somit zu einer signifikanten Änderung der Unterkühlung führt.

Eine andere Weiterbildung besteht darin, dass die Unterkühlung zu einem ersten und einem zweiten Zeitpunkt bestimmt werden kann und der Schritt des Detektierens umfassen kann: Detektieren der Leckage falls sich die Unterkühlung zum zweiten Zeitpunkt um einen vorbestimmten Betrag gegenüber der Unterkühlung zum ersten Zeitpunkt verringert hat bzw. falls sich die Füllmenge um einen vorbestimmten Betrag verringert hat. Durch Vorgabe eines vorbestimmten Betrags können prozessbedingt auftretende Schwankungen im Normalbetrieb als Grund für das Detektieren einer Leckage ausgeschlossen werden.

Diese Weiterbildung kann dahingehend weitergebildet werden, dass im Falle eines weniger als eine Warnzeitdauer anhaltenden Unterschreitens einer Warnschwelle für die Unterkühlung bzw. die Füllmenge kein Warnsignal ausgegeben wird und im Falle eines die Warnzeitdauer oder länger anhaltenden Unterschreitens der Warnschwelle ein Warnsignal ausgegeben wird. Hierbei wird ein kurzfristiges Verharren der Unterkühlung unterhalb der Warnschwelle berücksichtigt, um von einer stetigen Änderung der Unterkühlung oder der Füllmenge zu unterscheiden.

Gemäß einer anderen Weiterbildung kann die Unterkühlung bzw. die Füllmenge zu weiteren Zeitpunkten, insbesondere kontinuierlich, ermittelt werden und aus den ermittelten Werten ein Ausfallzeitpunkt prognostiziert werden, bei dem eine Grenzunterkühlung bzw. eine Grenzfüllmenge erreicht wird, bei der die thermodynamische Kreisprozessvorrichtung nicht mehr funktionsfähig ist. Auf diese Weise wird der Trend des Abfalls der Unterkühlung extrapoliert und ermittelt, wann ein kritischer Grenzwert der Unterkühlung bzw. der Füllmenge voraussichtlich erreicht werden wird.

Diese Weiterbildung kann dahingehend weitergebildet werden, dass im Fall, dass der prognostizierte Ausfallzeitpunkt vor einen Zeitpunkt für eine Standardwartung der thermodynamischen Kreisprozessvorrichtung fällt, eine separate Wartung zum Beheben der Leckage vor dem Ausfallzeitpunkt durchgeführt wird, und/oder im Fall, dass der prognostizierte Ausfallzeitpunkt auf oder nach den Zeitpunkt der Standardwartung der thermodynamischen Kreisprozessvorrichtung fällt, die Wartung zum Beheben der Leckage zusammen mit der Standardwartung durchgeführt wird. Auf diese Weise wird ein Ausfall der thermodynamischen Kreisprozessvorrichtung vermieden bzw. die Anzahl der Wartungen werden reduziert..

Eine andere Weiterbildung besteht darin, dass der Sollwert der Unterkühlung für verschieden Zustände der thermodynamischen Kreisprozessvorrichtung vorbestimmt sein kann.

Die Erfindung stellt auch ein Computerprogrammprodukt zur Verfügung, welches Programmteile umfasst, die zur Durchführung des erfindungsgemäßen Verfahrens oder einer der Weiterbildungen geeignet sind, wenn sie in einem Computer geladen sind.

Die erfindungsgemäße Aufgabe wird weiterhin gelöst durch eine Vorrichtung nach Anspruch 12.

Die erfindungsgemäße thermodynamische Kreisprozessvorrichtung, insbesondere eine ORC-Vorrichtung, umfasst: einen Kondensator zum Kondensieren von dampfförmigem Arbeitsmedium; einen Temperatursensor zum Messen einer Temperatur von flüssigem aus dem Kondensator austretenden Arbeitsmedium; und Mittel zum Ermitteln einer Unterkühlung des Arbeitsmediums im Kondensator, wobei die Unterkühlung als Differenz zwischen einer Kondensationstemperatur im Kondensator und der Temperatur des flüssigen aus dem Kondensator austretenden Arbeitsmediums ermittelt wird, und zum Detektieren einer Leckage falls die ermittelte Unterkühlung von einem Sollwert der Unterkühlung abweicht oder falls eine aus der ermittelten Unterkühlung bestimmte Füllmenge des Arbeitsmediums in der thermodynamischen Kreisprozessvorrichtung von einem Sollwert der Füllmenge abweicht. Die Vorteile der erfindungsgemäßen Vorrichtung und deren Weiterbildungen entsprechen jenen des erfindungsgemäßen Verfahrens und dessen Weiterbildungen und werden hier nicht nochmal aufgeführt.

Gemäß einer Weiterbildung der erfindungsgemäßen thermodynamischen Kreisprozessvorrichtung können die Mittel zum Ermitteln und zum Detektieren umfassen: einen Drucksensor zum Messen eines Kondensationsdrucks, der insbesondere im Kondensator angeordnet ist; und eine Auswerteeinrichtung zum (i) Bestimmen einer Kondensationstemperatur im Kondensator aus dem gemessenen Kondensationsdruck, (ii) Bestimmen der Unterkühlung des Arbeitsmediums im Kondensator als Differenz zwischen einer Kondensationstemperatur im Kondensator und einer Temperatur von flüssigem aus dem Kondensator austretenden Arbeitsmedium, und (iii) Detektieren der Leckage falls die ermittelte Unterkühlung von dem Sollwert der Unterkühlung abweicht oder falls die aus der ermittelten Unterkühlung bestimmte Füllmenge von dem Sollwert der Füllmenge abweicht. Der Drucksensor kann im Kondensator oder an einer anderen Stelle auf der Niederdruckseite der Kreisprozessvorrichtung angeordnet sein. Der Temperatursensor ist beispielsweise im Kondensator am Auslass des Kondensators vorgesehen, er kann aber auch an anderer Stelle zwischen dem Kondensator und der Speisepumpe angeordnet sein, z.B. in der Leitung zur Speisepumpe, vorzugsweise in unmittelbarer Nähe des Auslasses des Kondensators.

Eine andere Weiterbildung besteht darin, dass die Auswerteeinrichtung zum Bestimmen der Füllmenge des Arbeitsmediums in der thermodynamischen Kreisprozessvorrichtung, insbesondere einer Masse oder eines Volumens des Arbeitsmediums, aus der so ermittelten Unterkühlung unter Verwendung einer Relation zwischen Unterkühlung und Füllmenge ausgebildet sein kann.

Nach einer anderen Weiterbildung kann der Kondensator senkrecht angeordnete Kondensatorflächen aufweisen, insbesondere wobei der Kondensator ein senkrechter Rohrkondensator, ein Microchannel-Kondensator, ein Mini- oder Microtube-Kondensator, oder ein senkrechter Plattenkondensator ist.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

## Zeichnungen

| Fig. 1 | zeigt schematisch die Unterkühlung über teilweise gefüllte Flächen eines senkrecht stehenden Kondensators. |
| --- | --- |
| Fig. 2A,B,C | zeigen verschieden Bauformen von Kondensatoren. |
| Fig. 3 | zeigt ein Temperatur-Wärme-Diagramm eines ORC-Prozesses. |
| Fig. 4 | zeigt einen Zusammenhang zwischen Unterkühlung und Menge an Arbeitsmedium. |
| Fig. 5 | zeigt das Trendmonitoring der Unterkühlung. |
| Fig. 6 | zeigt Messdaten zur Unterkühlung an einer Versuchsanlage. |
| Fig. 7 | zeigt eine Ausführungsform der erfindungsgemäßen Vorrichtung. |

## Ausführungsformen

Erfindungsgemäß kann ohne einen herkömmlichen Füllstandsensor auf eine Änderung der sich aktuell im geschlossenen Kreislauf befindlichen Menge des Arbeitsmediums geschlossen werden. Dies wird möglich durch eine Kenntnis der Medienzustände im Betrieb und der daraus errechneten Fluidverteilung im System. Kern der Erfindung ist die Ermittlung der Unterkühlung des Mediums, woraus weiterhin auf die Füllhöhe des vertikal angeordneten Kondensators und auf die im Kreisprozess vorhandene Menge des Arbeitsmediums unter Verwendung weiterer gemessener Stoffgrößen und Anlagenparameter geschlossen werden kann.

Die Vorteile der Erfindung bestehen darin, dass keine Füllstandssensorik notwendig ist, dass sich durch eine Trendüberwachung Werte in der Zukunft ermitteln und schleichende Leckagen messen lassen, dass durch eine Trendüberwachung eine Abweichung der Füllmenge relativ genau ermittelt werden kann ohne dass die Füllmenge als absoluter Wert genau bekannt sein muss, dass die ermittelte Unterkühlung als Warn- oder Ausschaltkriterium für die ORC-Anlage verwendet werden kann, dass bestimmte Arbeitsmedien verwendet werden können, deren Dampfdruck bei Umgebungstemperatur unterhalb des Umgebungsdrucks liegt und dennoch eine Leckage erkannt werden kann, und dass Anforderungen eines Leckage-Erkennungssystems nach (EG) Nr. 842/2006 erfüllt werden können. Ein weiterer Vorteil ist, dass eine Leckage im Betriebszustand detektiert werden kann.

Nachteilig ist, dass die Vorhersage der Unterkühlung nur für einen Anlagentyp möglich ist, da die Füllmengenberechnung von der Geometrie der eingesetzten Komponenten abhängt, dass für eine Vorhersage von Absolutwerten des Füllstands bzw. der Leckage eine sehr genaue Messtechnik verwendet werden muss.

**Zusammenhang zwischen Füllmenge $m_{Fluid}$ und Unterkühlung $\Delta T_{UK}$ des Fluids**

Für den sicheren Betrieb eines Kreisprozesses zur Stromerzeugung mit organischen Medien ist im Zulauf der Speisepumpe ein gewisser Abstand des Arbeitsmediendrucks vom Verdampfungsdruck der vorherrschenden Fluidtemperatur möglich, dieser Abstand wird auch als Vorlaufhöhe (NPSH) bezeichnet. Dies kann durch drei Maßnahmen, einzeln oder auch in Kombination, sichergestellt werden:

1. Höhendifferenz zwischen Speisepumpe und Flüssigkeitsspiegel, im hier genannten Anwendungsfall liegt der Flüssigkeitsspiegel im Kondensator

2. Beaufschlagung des Arbeitsmediums mit einem Vordruck durch inertes Gas (siehe z.B. DE10 2009 053390 B3)

3. Unterkühlung des Arbeitsmediums; die Temperatur $T_{Kond}$ des Fluids ist im Zulauf geringer als die zum Kondensationsdruck gehörende Verdampfungstemperatur $T'_{Kond}$, wobei die Unterkühlung als $\Delta T_{UK} = T'_{Kond} - T_{Kond}$ definiert ist.

Insbesondere die Anwendung der letzten Möglichkeit erlaubt eine besonders kompakte Bauweise der ORC-Anlage, da keine oder nur eine geringe Höhendifferenz erforderlich ist, sowie zudem der Speisebehälter weggelassen werden kann. Im Stand der Technik werden jedoch in der Regel horizontal angeordnete Kondensatorflächen bzw. -rohre verwendet. Dies hat den Nachteil, dass konstruktionsbedingt sehr viel Fluid in dem zur Unterkühlung verwendeten Kondensatorzug bevorratet werden muss oder dass ein separater Unterkühler verwendet werden muss.

Vorteilhaft sind senkrecht oder geneigt orientierte Kondensatorflächen. Eine ausreichende Unterkühlung kann sichergestellt werden, wenn so viel Arbeitsmedium in die Anlage gefüllt wird, dass die senkrecht stehenden Kondensatorflächen im Betrieb zum Teil mit flüssigem Arbeitsmedium gefüllt sind. Der gefüllte Teil des Kondensators wirkt dann wie ein Unterkühler. Bei bekannten Komponenten (bekannten Innenvolumina) und einem bestimmten Auslegungszustand kann die Füllmenge für die Anlage berechnet werden, die eine ausreichende Unterkühlung für alle Betriebszustände gewährleistet.

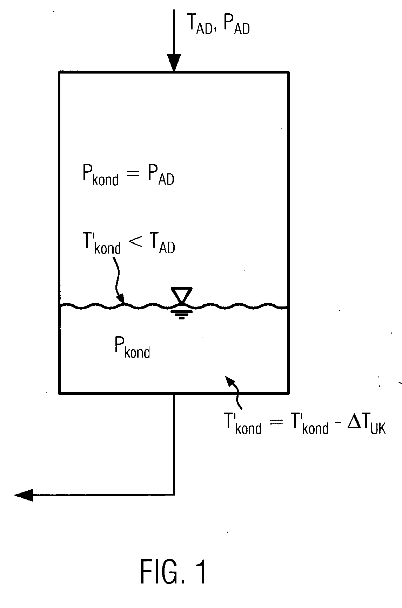

Fig. 1 zeigt schematisch die Unterkühlung über teilweise gefüllte Flächen des senkrecht stehenden Kondensators. Von einer Expansionsmaschine tritt Abdampf mit einer Temperatur $T_{AD}$ in den Kondensator ein, wobei in dem Kondensator (bzw. im ganzen Niederdruckbereich zwischen Expansionsmaschine und Speisepumpe) ein Druck $p_{Kond}$ entsprechend dem Abdampfdruck $p_{AD}$ herrscht.

**Leckagedetektion über die Unterkühlung $\Delta T_{UK}$**

Wie oben beschrieben wird über die Menge an Arbeitsmedium in der Anlage die Unterkühlung festgelegt. Verringert sich die Menge durch Leckage, wird bei sonst vergleichbaren Betriebsparametern der ORC-Anlage auch die Unterkühlung geringer. Durch Leckage fällt der Flüssigkeitsspiegel in den senkrecht oder geneigt stehenden Kondensatorflächen ab. Somit steht eine geringere Fläche für die Wärmeübertragung zur Verfügung, das Fluid kann weniger weit unter die Kondensationstemperatur $T'_{Kond}$ abgekühlt werden, die Unterkühlung $\Delta T_{UK}$ ist geringer.

Bei den im Stand der Technik verwendeten horizontalen Kondensatoren oder separaten Unterkühlern ist die Menge an flüssig bevorratetem Arbeitsmedium sehr groß, um eine Unterkühlung zu realisieren. Eine kleine Leckage würde in diesem Fall den Flüssigkeitsspiegel nicht merklich oder nur in geringem Maße ändern. Damit ändert sich auch die Unterkühlung nicht wesentlich, und ein solches System kann zur Detektion von kleinen Leckagen nicht zuverlässig verwendet werden. Werden stattdessen vertikale Kondensator-Wärmeübertrager eingesetzt ist die mit Flüssigkeit gefüllte Querschnittsfläche deutlich geringer. Insbesondere eignen sich dazu Microchannel-Wärmeübertrager, wie sie auch im Automobilbau als Kühler eingesetzt werden. Durch die sehr geringe Querschnittsfläche der Mikro-Kanäle ändert schon eine geringe Leckage die Höhe des Flüssigkeitspegels und damit die Unterkühlung stark. Ein von der Funktion den Microchannel ähnliche Kondensatorausführung sind Mini- oder Microtube-Wärmeübertrager mit im Vergleich zu konventionellen Rohrkondensatoren deutlich geringeren Querschnittsflächen. Ebenso möglich ist die Verwendung von Plattenwärmeübertragern, welche bei senkrechter Plattenorientierung ein ähnliches Verhalten zeigen, auf der kalten Seite als Kühlmedium hauptsächlich Flüssigkeit verwenden.

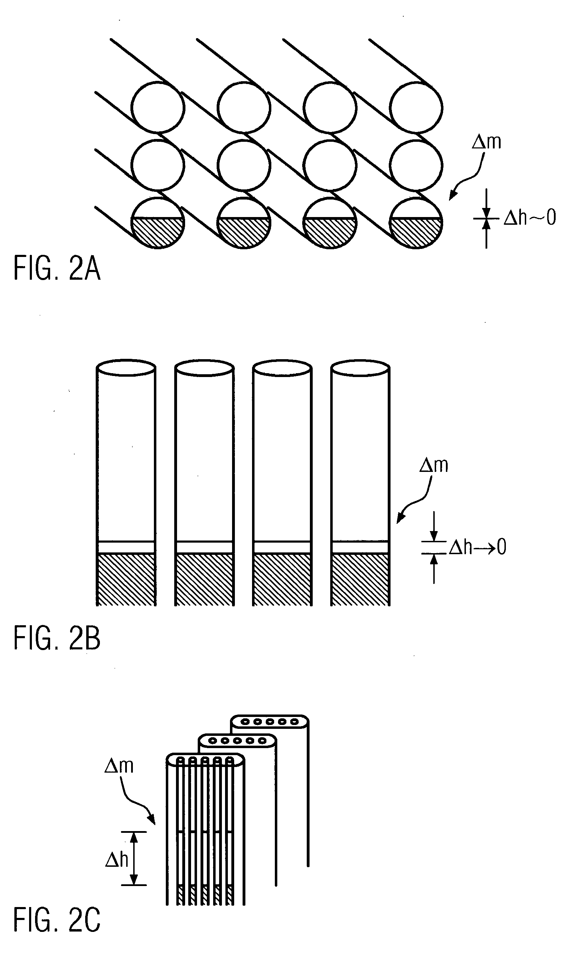

Fig. 2A zeigt einen horizontalen Rohr-Kondensator. Die Höhendifferenz des Flüssigkeitsspiegels bei einer Leckage und damit verbundenem Massenverlust $\Delta m$ geht gegen 0.

Fig. 2B zeigt einen senkrechten Rohr-Kondensator. Die Höhendifferenz des Flüssigkeitsspiegels bei einer Leckage ist gering.

Fig. 2C zeigt einen Microchannel-Kondensator. Die Höhendifferenz des Flüssigkeitsspiegels bei einer Leckage ist groß.

Die Größe $\Delta T_{UK}$ eignet sich somit zur Bestimmung der Menge an Arbeitsmedium in der Anlage und zur Leckagedetektion. Bei Verwendung von Microchannel-Kondensatoren kann man im Gegensatz zu Rohrkondensatoren die Leckage sehr genau aus der Unterkühlung ermitteln, da bereits geringe Leckagen mit einer starken Änderung des Flüssigkeitsspiegels einhergehen. Prinzipiell eignet sich das Verfahren jedoch gut für alle Kondensatoren mit senkrechter Rohrführung.

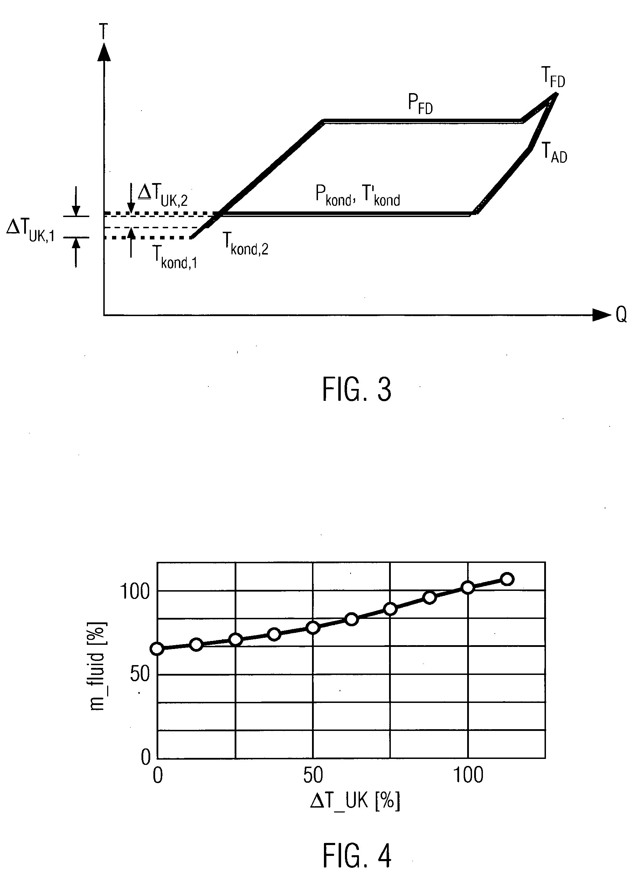

Fig. 3 zeigt ein Temperatur-Wärme-Diagramm (TQ-Diagramm) eines ORC-Prozesses. Im Fall 1 (dicke Linie) befindet sich eine große Füllmenge im senkrechten Kondensator. Im Fall 2 (dünne Linie) hingegen ist nur eine geringe Füllmenge im senkrechten Kondensator. Aus dem Diagramm ist ersichtlich, dass die Unterkühlung im Fall 2 geringer als im Fall 1 ist, $\Delta T_{UK,2} < \Delta T_{UK,1}$.

Fig. 4 zeigt einen durch Messdaten und Simulation bestimmten beispielhaften Zusammenhang zwischen Unterkühlung und Menge an Arbeitsmedium für eine bestimmte ORC-Anlage und für einen Betriebszustand. Dabei entspricht der Punkt (100%; 100%) einem Sollzustand

Die Unterkühlung $\Delta T_{UK}$ ist in der Regel keine direkt gemessene bzw. messbare Größe. Sie lässt sich aber aus der direkt gemessenen Fluidtemperatur am Austritt des Kondensators $T_{Kond}$ und der aus dem gemessenen Kondensationsdruck $p_{Kond}$ mittels Stoffdaten bestimmten Kondensationstemperatur $T'_{Kond}$ bestimmen:

$$\Delta T_{UK} = T'_{Kond} - T_{Kond}$$

Der gemessene Kondensationsdruck / Sättigungsdruck ist dabei ggf. bereits um mögliche Druckverluste bis zum Druckmessgerät oder / und Druckabweichungen aufgrund eines evtl. im System vorhandenen Inertgases korrigiert, beispielsweise als Offset.

**Für die Unterkühlung relevante Einflussgrößen**

Prinzipiell ist die Unterkühlung im Betrieb von verschiedenen Parametern abhängig. Die wesentlichen sind: Wärmeinput in die Anlage; Abdampfparameter (Druck und Temperatur); Umgebungstemperatur; Volumenstrom des Kühlmediums durch den Kondensator; Füllmenge in der Anlage.

Je nach Art der Anlagenregelung lassen sich verschiedene Parameter ausschließen bzw. wird die Füllmenge und damit Leckage auf verschiedene Arten berechnet.

    1. Im einfachsten Fall regelt die ORC-Anlage einerseits auf bestimmte Frischdampfparameter sowie andererseits auf einen bestimmten Kondensationsdruck. Bei gleichen Frischdampfparametern stellen sich jedoch bei gegebener Expansionsmaschine auch gleiche Abdampfparameter ein. Diese haben somit keinen Einfluss mehr auf die Unterkühlung. Die Größen Wärmeinput, Umgebungstemperatur und Luftvolumenstrom beeinflussen alle den Kondensationsdruck. Dieser wird jedoch auf einen fest eingestellten Wert geregelt. Die Unterkühlung hängt damit lediglich vom Kondensationsdruck und von der Anlagenfüllung ab, bzw. die Füllmenge $m_{fluid}$ an Arbeitsmedium lässt sich direkt aus Unterkühlung und Kondensationsdruck bestimmen:

$$m_{fluid} = f(\Delta T_{UK}, p_{Kond})$$

    2. Sind die Frischdampfparameter $T_{FD}$, $p_{FD}$ und somit die Abdampfparameter $T_{AD}$, $p_{AD}$ variabel, lässt sich die Füllmenge $m_{fluid}$ in der Anlage aus der Summe der Füllmengen im Hochdruckteil der Anlage (maßgeblich Verdampfer sowie Zuleitung von der Speisepumpe und Frischdampfleitung) $m_{HD}$, der Füllmenge an flüssigem Arbeitsmedium im Kondensator und der Zuleitung zu der Speispumpe $m_{Kond}$ und der Menge an dampfförmigem Arbeitsmedium im Niederdruckteil der Anlage (Abdampfleitung und Kondensator) $m_{ND}$ bestimmen:

$$m_{fluid} = m_{HD} + m_{Kond} + m_{ND}$$

Für die einzelnen Mengenanteile des Arbeitsmediums existieren die folgenden Zusammenhänge:

$$m_{HD} = f(T_{FD}, p_{FD})$$
$$m_{Kond} = f(\Delta T_{UK}, p_{Kond})$$
$$m_{ND} = f(T_{AD}, p_{Kond})$$

Diese Zusammenhänge gelten jeweils für eine gegebene Anlagengeometrie.

Der Einfluss aller relevanten Größen lässt sich aus Messungen bzw. Simulation der Anlage bestimmen. Für jeden Anlagenzustand kann daher bei einer bestimmten Füllmenge ein Sollwert für die Unterkühlung berechnet werden. Es ist dabei nicht nötig, dass der absolute Wert der Füllmenge bekannt ist. Eine Abweichung der Füllmenge lässt sich in jedem Fall anhand einer Änderung der Unterkühlung feststellen.

**Leckagedetektion und Trendmonitoring während des Anlagenbetriebs**

Durch den oben dargestellten Zusammenhang zwischen Unterkühlung und Kondensationsdruck kann die Vorhersage eines Sollwerts für die Unterkühlung $\Delta T_{UK,soll}$ für die Anlagenüberwachung genutzt werden.

Eine Leckage kann auf zwei unterschiedliche Arten auftreten. Im ersten Fall als plötzlicher Verlust einer großen Menge an Arbeitsmedium, z.B. aufgrund einer geöffneten Rohrleitungsverbindung. Eine solche Leckage führt unweigerlich zum Anlagenausfall. Methoden zur Überwachung greifen hier nicht. Im zweiten Fall als schleichende Leckage, bei der über einen längeren Zeitraum nur kleine Mengen an Arbeitsmedium austreten, so dass die Anlage trotz Leckage vorerst weiter betrieben werden kann. Ohne Füllstandsensor fällt eine derartige Leckage erst auf, wenn es zum Anlagenausfall kommt. Im zweiten Fall kann die Unterkühlung in Zusammenhang mit einem Monitoring der Betriebsdaten zur frühzeitigen Detektion genutzt werden. Bewegt sich die Unterkühlung innerhalb eines gegebenen Sollbereichs, ändert sich die Füllmenge an Arbeitsmedium nicht. Fällt sie jedoch unter einen bestimmten Wert ist eine Leckage wahrscheinlich. Folgende Zustände können über das Trendmonitoring erfasst werden:

Die Unterkühlung bzw. die daraus berechnete Füllmenge fällt unter einen gewissen Wert (Warnschwelle). Die Warnschwelle ist so gewählt, dass bis zum Anlagenausfall noch ein gewisser Sicherheitsabstand verbleibt. Bleibt die Füllmenge aufgrund schleichender Leckage unter diesem Wert, wird nach einer gewissen Zeit $\Delta t_{Warnung}$ eine Warnung von der Anlagensteuerung ausgegeben. Aus dem Verlauf der Füllmenge vor und nach der Warnung kann eine Zeit approximiert werden, in der die Füllmenge durch die Leckage soweit gefallen ist, dass es zum Anlagenausfall kommt. Diese Trendberechnung der Füllmenge wird laufend mit den aufgezeichneten Daten verfeinert. Die approximierte Zeit gibt das Intervall vor, innerhalb dessen die Anlage gewartet werden muss, so dass es nicht zum Anlagenstillstand kommt.

Für die Anlage können Standard-Wartungsintervalle hinterlegt werden. Fällt die Füllmenge so langsam ab, dass es voraussichtlich nicht vor der nächsten Standardwartung (z.B. jährliche Wartung) zu einem Anlagenausfall kommt, kann die Leckagesuche und -reparatur zusammen mit der Standardwartung erfolgen und eine extra Wartungsfahrt gespart werden. Liegt der prognostizierte Anlagenausfall vor der nächsten Standardwartung, kann von der Anlagensteuerung zusätzlich eine Dringlichkeits-Warnung ausgegeben werden.

Die Füllmenge fällt betriebsbedingt oder aufgrund von statistischen Schwankungen der Messwerte kurzzeitig unter die Warnschwelle. Steigt der Wert innerhalb des definierten Zeitintervalls $\Delta t_{Warnung}$ wieder über die Schwelle, wird keine Warnung ausgegeben.

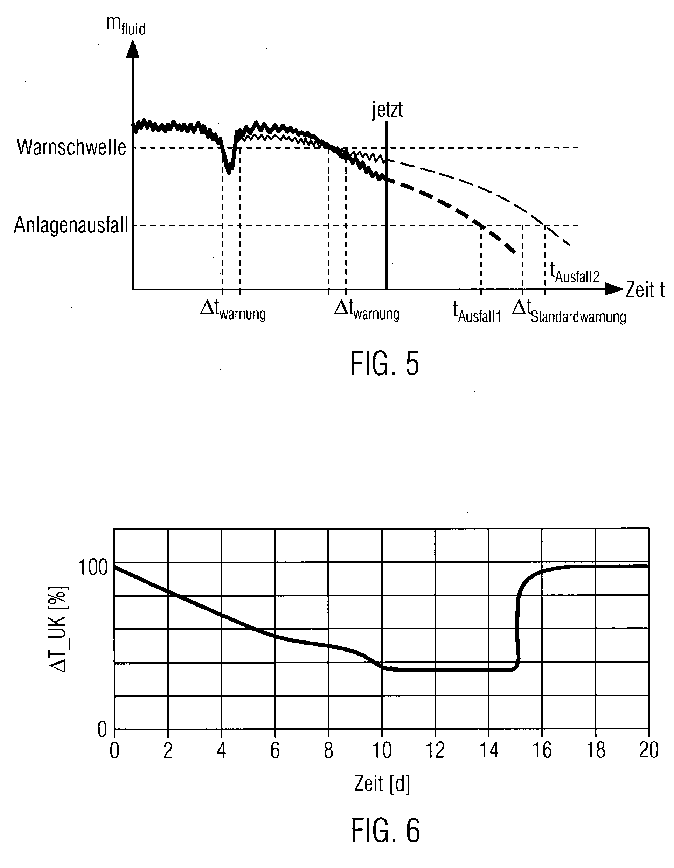

Fig. 5 zeigt das Trendmonitoring der Unterkühlung mit Schwellen für Warnung und Anlagenausfall. Im Fall 1 (dicke Linie) ist die prognostizierte Zeit kürzer als das Zeitintervall bis zur Standardwartung, es muss eine vorzeitige Wartung erfolgen. Im Fall 2 (dünne Linie) liegt der prognostizierte Anlagenausfall nach der Standardwartung, und eine Leckagesuche und -reparatur kann im Rahmen der Standardwartung erfolgen. Die kurzfristige Unterschreitung der Warnschwelle führt nicht zur Warnung.

Diese Art der Leckagedetektion hat die folgenden Vorteile: Eine Leckage wird schon deutlich vor dem Anlagenausfall erkannt. Die Zeit bis zum Anlagenausfall kann vorhergesagt werden und damit ein Zeitraum angegeben werden, innerhalb dessen eine Anlagenwartung erfolgen muss, so dass es nicht zu einem Betriebsausfall kommt. Dadurch kann insgesamt die Anlagenverfügbarkeit erhöht werden. Die prognostizierte Zeit bis zum Anlagenausfall gewährleistet eine Planbarkeit der Wartung (z.B. gleichzeitige Wartung von lokal nahe gelegenen Anlagen und damit Zeit- und Kostenersparnis). Durch eine definierte Verzögerung der Warnung vom ersten Unterschreiten der Warnschwelle bis zur tatsächlichen Warnung kann von einer möglicherweise verfrühten oder unnötigen Wartung abgesehen werden und somit Wartungskosten eingespart werden. Die erfindungsgemäße Leckagedetektion erfordert in der Regel keinerlei zusätzliche Sensorik.

Die Anwendbarkeit des erfindungsgemäßen Verfahrens wurde experimentell nachgewiesen. An einer Versuchsanlage wurde über mehrere Tage die Unterkühlung bei Leckage bestimmt. Mit abnehmender Menge an Arbeitsmedium fällt die Unterkühlung konstant. Der ursprüngliche Wert der Unterkühlung konnte am Ende des Experiments wieder hergestellt werden, indem Arbeitsmedium nachgefüllt wurden, wie in Fig. 6 dargestellt. Die vertikale Achse gibt dabei die Unterkühlung relativ zum Sollwert von 100% an.

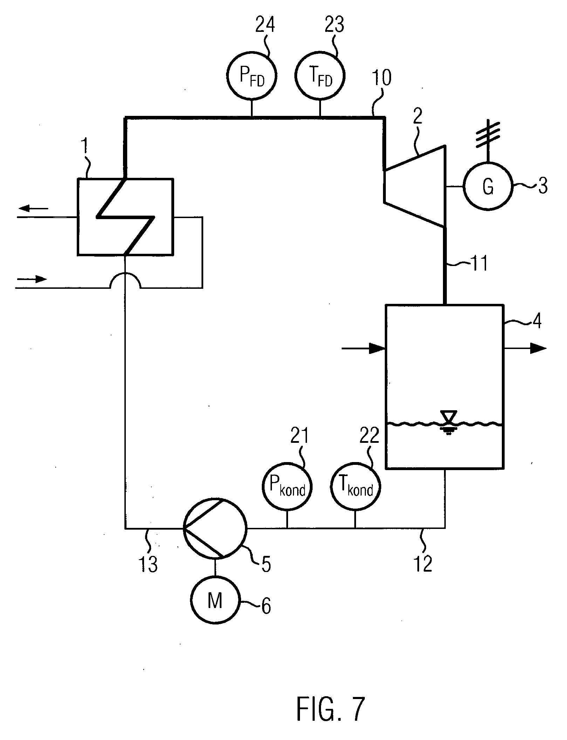

Fig. 7 zeigt eine Ausführungsform der erfindungsgemäßen Vorrichtung. Die gezeigte thermodynamische Kreisprozessvorrichtung zur Gewinnung von elektrischer Energie aus Wärmeenergie beruht hierbei auf dem Organic Rankine Cycle als thermodynamischen Kreisprozess (ORC System). Die Vorrichtung besteht aus den folgenden Hauptkomponenten: eine Speisepumpe 5, die von einem Motor 6 angetrieben wird und die flüssiges organisches Arbeitsmedium unter Druckerhöhung zu einem Verdampfer 1 fördert, dem Verdampfer 1 selbst, in dem das Arbeitsmedium unter Zuführung von Wärme verdampft und optional zusätzlich überhitzt wird, eine Expansionsmaschine 2, in welcher der unter hohem Druck stehende Dampf entspannt wird und dabei mechanische Energie erzeugt, welche über einen Generator 3 zu elektrischer Energie gewandelt wird, und einem Kondensator 4, in dem der Niederdruckdampf aus der Expansionsmaschine 2 verflüssigt wird. Aus dem Kondensator 4 gelangt das flüssige Arbeitsmedium wieder zur Speisepumpe 5 des Systems, wodurch der thermodynamische Kreislauf geschlossen ist. Im Hochdruckbereich der Vorrichtung befindet sich auch die Zuleitung 13 von der Speisepumpe zum Verdampfer 1 und die Frischdampfleitung 10 vom Verdampfer 1 zur Expansionsmaschine 2. Auf der Niederdruckseite wird Abdampf von der Expansionsmaschine 2 in der Abdampfleitung 11 zum Kondensator 4 geleitet, sowie kondensiertes, unterkühltes Arbeitsmedium in der Leitung 12 vom Kondensator 4 zur Speisepumpe 5 geleitet. Die Kondensationstemperatur wird mit einem Temperatursensor 21 und der Kondensationsdruck mit Hilfe des Drucksensors 22 ermittelt, wobei die Sensoren 21 und 22 in diesem Beispiel das Arbeitsmedium in der Leitung 12 erfassen. Alternativ könnte der Temperatursensor 21 auch innerhalb des Kondensators 4 am unteren Ende in der Nähe des Ausgangs und/oder der Drucksensor 22 könnte im Kondensator oder an der Leitung 11 angeordnet sein. In dieser Ausführungsform können auch ein Temperatursensor 23 und ein Drucksensor 24 an der Leitung 10 zur Erfassung der entsprechenden Frischdampfwerte auf der Hochdruckseite vorgesehen sein.

## Leckagedetektion im Stillstand

Im Stillstand bei kalter Anlage stellt sich in der Anlage der Dampfdruck des Arbeitsmediums bei Umgebungstemperatur ein. Je nach Art des Arbeitsmediums kann dieser Druck unterhalb des Umgebungsdrucks liegen, was eine Leckagesuche mit konventionellen Methoden unmöglich macht. Da kein Medium umgewälzt wird und überall in der Anlage die gleiche Temperatur herrscht, kann auch keine Unterkühlung bestimmt werden. Unter Nutzung des in der Patentanmeldung EP 13189918.9 als Naturumlauf offenbarten Verfahrens, wird sichergestellt, dass das Arbeitsmedium auch im Stillstand durch Naturumlauf umgewälzt wird und sich somit eine Unterkühlung einstellt. Dann kann das gleiche Verfahren wie im Betrieb zur Detektion von Leckage genutzt werden.

## Vorteile der Erfindung gegenüber dem allgemeinen Stand der Technik

Durch die Erfindung wird es möglich, Leckage z.B. in einem organischen Kreisprozess ohne Verwendung spezieller Sensoren (Füllstandsensoren o.Ä.) zu erkennen. Füllstandsensoren lassen sich außerdem auch nur dann anwenden, wenn in der Anlage ein messbarer Flüssigkeitsspiegel, typischerweise in einem Speisebehälter, vorhanden ist. Die Erfindung erlaubt eine zuverlässige Leckagedetektion, auch wenn in der Anlage kein Speisebehälter vorgesehen ist. Bestimmte Arbeitsmedien haben bei Umgebungstemperatur einen Dampfdruck (welcher bei Stillstand in der kompletten Anlage herrscht), der unterhalb des Umgebungsdrucks liegt. In diesem Fall tritt im Stillstand kein Arbeitsmedium aus der Anlage aus und kann somit nicht detektiert werden. Durch Anwendung der hier beschriebenen Erfindung im Zusammenhang mit dem oben genannten "Naturumlauf" ist eine Leckagedetektion trotzdem möglich. Die Erfindung kann vorteilhaft dann zur Anwendung kommen, wenn als Kondensatoren anstatt im Stand der Technik üblicher Wärmeübertrager mit horizontal angeordneten Rohren, senkrecht stehende Kondensatoren mit möglichst geringer Rohrquerschnittsfläche bzw. Kanalquerschnittsfläche zum Einsatz kommen. Dies wird insbesondere durch den Einsatz von Microchannel-Kondensatoren oder Plattenwärmeübertragern sichergestellt.

Die dargestellten Ausführungsformen sind lediglich beispielhaft und der vollständige Umfang der vorliegenden Erfindung wird durch die Ansprüche definiert.

## Patentansprüche

1. Verfahren zum Detektieren einer Leckage in einer thermodynamischen Kreisprozessvorrichtung, wobei die Kreisprozessvorrichtung einen Kondensator zum Kondensieren von dampfförmigem Arbeitsmedium umfasst, und wobei das Verfahren die folgenden Schritte umfasst:

   Ermitteln einer Unterkühlung des Arbeitsmediums im Kondensator, wobei die Unterkühlung als Differenz zwischen einer Kondensationstemperatur im Kondensator und einer Temperatur von flüssigem aus dem Kondensator austretenden Arbeitsmedium ermittelt wird; Detektieren einer Leckage falls die ermittelte Unterkühlung von einem Sollwert der Unterkühlung abweicht oder falls eine aus der ermittelten Unterkühlung bestimmte Füllmenge des Arbeitsmediums in der thermodynamischen Kreisprozessvorrichtung von einem Sollwert der Füllmenge abweicht.

2. Verfahren nach Anspruch 1, wobei die Füllmenge des Arbeitsmediums, insbesondere eine Masse oder ein Volumen des Arbeitsmediums, aus der ermittelten Unterkühlung unter Verwendung einer Relation zwischen Unterkühlung und Füllmenge bestimmt wird.

3. Verfahren nach Anspruch 2, wobei die Relation zwischen Unterkühlung und Füllmenge ein funktionaler Zusammenhang oder eine tabellarische Zuordnung zwischen Unterkühlung und Füllmenge ist.

4. Verfahren nach einem der Ansprüche 1 bis 3, wobei die Kondensationstemperatur aus einem gemessenen Kondensationsdruck bestimmt wird.

5. Verfahren nach einem der Ansprüche 1 bis 4, wobei der Kondensator senkrecht angeordnete Kondensatorflächen oder um einen Winkel zwischen 0° und 80°, vorzugsweise zwischen 0° und 45°, höchst vorzugsweise zwischen 0° und 30°, gegenüber der Senkrechten geneigte Kondensatorflächen aufweist, insbesondere wobei der Kondensator ein senkrechter Rohrkondensator, ein Microchannel-Kondensator, ein Mini- oder Microtube-Kondensator, oder ein senkrechter Plattenkondensator ist.

6. Verfahren nach einem der Ansprüche 1 bis 5, wobei die Unterkühlung zu einem ersten und einem zweiten Zeitpunkt bestimmt wird und der Schritt des Detektierens umfasst:

   Detektieren der Leckage falls sich die Unterkühlung zum zweiten Zeitpunkt um einen vorbestimmten Betrag gegenüber der Unterkühlung zum ersten Zeitpunkt verringert hat bzw. falls sich die Füllmenge um einen vorbestimmten Betrag verringert hat.

7.  Verfahren nach Anspruch 6, wobei im Falle eines weniger als eine Warnzeitdauer anhaltenden Unterschreitens einer Warnschwelle für die Unterkühlung bzw. die Füllmenge kein Warnsignal ausgegeben wird und im Falle eines die Warnzeitdauer oder länger anhaltenden Unterschreitens der Warnschwelle ein Warnsignal ausgegeben wird.

8.  Verfahren nach Anspruch 6 oder 7, wobei die Unterkühlung bzw. die Füllmenge zu weiteren Zeitpunkten, insbesondere kontinuierlich, ermittelt wird und aus den ermittelten Werten ein Ausfallzeitpunktes prognostiziert wird, bei dem eine Grenzunterkühlung bzw. eine Grenzfüllmenge erreicht wird, bei der die thermodynamische Kreisprozessvorrichtung nicht mehr funktionsfähig ist.

9.  Verfahren nach Anspruch 8, wobei im Fall, dass der prognostizierte Ausfallzeitpunkt vor einen Zeitpunkt für eine Standardwartung der thermodynamischen Kreisprozessvorrichtung fällt, eine separate Wartung zum Beheben der Leckage vor dem Ausfallzeitpunkt durchgeführt wird, und/oder wobei im Fall, dass der prognostizierte Ausfallzeitpunkt auf oder nach den Zeitpunkt der Standardwartung der thermodynamischen Kreisprozessvorrichtung fällt, die Wartung zum Beheben der Leckage zusammen mit der Standardwartung durchgeführt wird.

10. Verfahren nach einem der Ansprüche 1 bis 9, wobei der Sollwert der Unterkühlung für verschieden Zustände der thermodynamischen Kreisprozessvorrichtung vorbestimmt ist.

11. Computerprogrammprodukt umfassend Programmteile, welche, wenn in einem Computer geladen, zur Durchführung des Verfahrens nach einem der Ansprüche 1 bis 10 geeignet sind.

12. Thermodynamische Kreisprozessvorrichtung, insbesondere eine ORC-Vorrichtung, umfassend:

    einen Kondensator zum Kondensieren von dampfförmigem Arbeitsmedium;
    einen Temperatursensor zum Messen einer Temperatur von flüssigem aus dem Kondensator austretenden Arbeitsmedium; und
    Mittel zum Ermitteln einer Unterkühlung des Arbeitsmediums im Kondensator, wobei die Unterkühlung als Differenz zwischen einer Kondensationstemperatur im Kondensator und der Temperatur des flüssigen aus dem Kondensator austretenden Arbeitsmediums ermittelt wird, und zum Detektieren einer Leckage falls die ermittelte Unterkühlung von einem Sollwert der Unterkühlung abweicht oder falls eine aus der ermittelten Unterkühlung bestimmte Füllmenge des Arbeitsmediums in der thermodynamischen Kreisprozessvorrichtung von einem Sollwert der Füllmenge abweicht.

13. Vorrichtung nach Anspruch 12, wobei die Mittel zum Ermitteln und zum Detektieren umfassen:

    einen Drucksensor zum Messen eines Kondensationsdrucks, der insbesondere im Kondensator angeordnet ist; und
    eine Auswerteeinrichtung zum

        (i) Bestimmen einer Kondensationstemperatur im Kondensator aus dem gemessenen Kondensationsdruck,
        (ii) Bestimmen der Unterkühlung des Arbeitsmediums im Kondensator als Differenz zwischen einer Kondensationstemperatur im Kondensator und einer Temperatur von flüssigem aus dem Kondensator austretenden Arbeitsmedium, und
        (iii) Detektieren der Leckage falls die ermittelte Unterkühlung von dem Sollwert der Unterkühlung abweicht oder falls die aus der ermittelten Unterkühlung bestimmte Füllmenge von dem Sollwert der Füllmenge abweicht.

14. Vorrichtung nach Anspruch 13, wobei die Auswerteeinrichtung zum Bestimmen der Füllmenge des Arbeitsmediums in der thermodynamischen Kreisprozessvorrichtung, insbesondere einer Masse oder eines Volumens des Arbeitsmediums, aus der so ermittelten Unterkühlung unter Verwendung einer Relation zwischen Unterkühlung und Füllmenge ausgebildet ist.

15. Thermodynamische Kreisprozessvorrichtung nach einem der Ansprüche 12 bis 14, wobei der Kondensator senkrecht angeordnete Kondensatorflächen aufweist, insbesondere wobei der Kondensator ein senkrechter Rohrkondensator, ein Microchannel-Kondensator, ein Mini- oder Microtube-Kondensator, oder ein senkrechter Plattenkondensator ist.

**Claims**

1.  Method for detecting leaks in a thermodynamic cycling apparatus, the thermodynamic cycling apparatus comprising a condenser for condensing vaporous working medium, and the method comprising the following steps:

    determining supercooling of the working medium in the condenser, supercooling being determined on the basis of the difference between a condensation temperature in the condenser and a temperature of liquid working medium leaving the condenser;
detecting a leak if the determined supercooling deviates from a setpoint value for supercooling or if a quantity of working medium in the thermodynamic cycling apparatus ascertained on the basis of the determined supercooling deviates from a setpoint value for the quantity.

2. Method as claimed in claim 1, wherein the quantity of working medium, in particular a mass or a volume of the working medium, is ascertained on the basis of the determined supercooling using a relationship between supercooling and quantity.

3. Method as claimed in claim 2, wherein the relationship between supercooling and quantity is a functional interrelationship or a tabular correlation between supercooling and quantity.

4. Method as claimed in one of claims 1 to 3, wherein the condensation temperature is ascertained on the basis of a measured condensation pressure.

5. Method as claimed in one of claims 1 to 4, wherein the condenser has vertically disposed condenser surfaces or has condenser surfaces inclined at an angle of between 0° and 80°, preferably between 0° and 45°, at most preferably between 0° and 30°, relative to the vertical, the condenser in particular being a vertical tubular condenser, a micro-channel condenser, a mini-tube or micro-tube condenser or a vertical plate condenser.

6. Method as claimed in one of claims 1 to 5, wherein supercooling is determined at a first and a second point in time and the detection step comprises:

   detecting a leak if supercooling at the second point in time has reduced by a predefined amount compared with supercooling at the first point in time respectively if the quantity has reduced by a predefined amount.

7. Method as claimed in claim 6, wherein if there is a continuing drop below a warning threshold for supercooling respectively the quantity for less than the duration of a warning time, no warning signal is emitted, and if there is a continuing drop below the warning threshold during the duration of the warning time or longer, a warning signal is emitted.

8. Method as claimed in claim 6 or 7, wherein supercooling respectively the quantity is determined at other points in time, in particular continuously, and a failure time at which threshold supercooling or a threshold quantity will occur when the thermodynamic cycling apparatus will no longer be functional is predicted on the basis of the determined values.

9. Method as claimed in claim 8, wherein if the predicted failure time falls before a time when routine maintenance work on the thermodynamic cycling apparatus is due, separate maintenance work is carried out before the failure time in order to repair the leak and/or if the predicted failure time coincides with or falls after the time when routine maintenance work on the thermodynamic cycling apparatus is due, maintenance to repair the leak is carried out as part of the routine maintenance work.

10. Method as claimed in one of claims 1 to 9, wherein the setpoint value for supercooling is predefined for different states of the thermodynamic cycling apparatus.

11. Computer programme product comprising programme parts which are suitable for implementing the method as claimed in one of claims 1 to 10 when loaded on a computer.

12. Thermodynamic cycling apparatus, in particular an ORC apparatus, comprising:

   a condenser for condensing vaporous working medium;
   a temperature sensor for measuring a temperature of liquid working medium leaving the condenser; and
   means for determining supercooling of the working medium in the condenser, supercooling being determined on the basis of the difference between a condensation temperature in the condenser and the temperature of the liquid working medium leaving the condenser, and for detecting a leak if the determined supercooling deviates from a setpoint value for supercooling or if a quantity of working medium in the thermodynamic cycling apparatus ascertained on the basis of the determined supercooling deviates from a setpoint value for the quantity.

13. Apparatus as claimed in claim 12, wherein the determination and detection means comprise:

   a pressure sensor for measuring a condensation pressure, in particular disposed in the condenser; and
   an evaluation unit for

      (i) ascertaining a condensation temperature in the condenser on the basis of the measured condensation pressure,

(ii) ascertaining supercooling of the working medium in the condenser based on the difference between a condensation temperature in the condenser and a temperature of liquid working medium leaving the condenser, and

(iii) detecting a leak if the determined supercooling deviates from the setpoint value for supercooling or if the quantity ascertained on the basis of the determined supercooling deviates from the setpoint value for the quantity.

14. Apparatus as claimed in claim 13, wherein the evaluation unit is configured to ascertain the quantity of working medium in the thermodynamic cycling apparatus, in particular a mass or a volume of the working medium, on the basis of supercooling determined in this manner using a relationship between supercooling and quantity.

15. Thermodynamic cycling apparatus as claimed in one of claims 12 to 14, wherein the condenser has vertically disposed condenser surfaces, the condenser in particular being a vertical tubular condenser, a micro-channel condenser, a mini-tube or micro-tube condenser or a vertical plate condenser.

**Revendications**

1. Procédé de détection d'une fuite dans un dispositif à cycle thermodynamique, le dispositif à cycle thermodynamique comprenant un condenseur pour condenser un fluide de travail sous forme de vapeur, et le procédé présentant les étapes suivantes :

la détermination d'un sous-refroidissement du fluide de travail dans le condenseur, le sous-refroidissement étant déterminé en tant que différence entre une température de condensation dans le condenseur et une température de fluide de travail liquide sortant du condenseur ;
la détection d'une fuite dans le cas où le sous-refroidissement déterminé s'écarte d'une valeur de consigne du sous-refroidissement, ou bien dans le cas où une quantité de remplissage du fluide de travail dans le dispositif à cycle thermodynamique, qui a été déterminée à partir du sous-refroidissement déterminé, s'écarte d'une valeur de consigne de la quantité de remplissage.

2. Procédé selon la revendication 1, d'après lequel la quantité de remplissage, notamment une masse ou un volume du fluide de travail, est déterminée à partir du sous-refroidissement déterminé, en utilisant une relation entre le sous-refroidissement et la quantité de remplissage.

3. Procédé selon la revendication 2, d'après lequel la relation entre le sous-refroidissement et la quantité de remplissage est un rapport fonctionnel ou une association sous forme de tableau entre le sous-refroidissement et la quantité de remplissage.

4. Procédé selon l'une des revendications 1 à 3, d'après lequel la température de condensation est déterminée à partir d'une pression de condensation mesurée.

5. Procédé selon l'une des revendications 1 à 4, d'après lequel le condenseur présente des surfaces de condenseur agencées verticalement, ou bien inclinées par rapport à la verticale d'un angle compris entre 0° et 80°, de préférence entre 0° et 45°, et de manière particulièrement préférée entre 0° et 30°, et d'après lequel le condenseur est notamment un condenseur à tubes vertical, un condenseur à microcanaux, un condenseur à mini ou micro-tubes, ou bien un condenseur à plaques vertical.

6. Procédé selon l'une des revendications 1 à 5, d'après lequel le sous-refroidissement est déterminé à un premier et à un deuxième instant, et l'étape de la détection comprend :

la détection de la fuite dans le cas où le sous-refroidissement au deuxième instant a diminué d'une valeur prédéterminée par rapport au sous-refroidissement au premier instant, ou dans le cas où la quantité de remplissage s'est réduite d'une valeur prédéterminée.

7. Procédé selon la revendication 6, d'après lequel dans le cas d'un passage sous un seuil d'alarme pour le sous-refroidissement ou la quantité de remplissage, qui dure un temps inférieur à une durée d'alarme, aucun signal d'alarme n'est délivré, et dans le cas d'un passage sous le seuil d'alarme, qui dure un temps égal ou supérieur à la durée d'alarme, un signal d'alarme est délivré.

8. Procédé selon la revendication 6 ou la revendication 7, d'après lequel le sous-refroidissement ou la quantité de remplissage sont déterminés à d'autres instants, notamment de manière continuelle, et, à partir des valeurs déterminées, on pronostique un instant de défaillance pour lequel on atteint un sous-refroidissement limite ou une quantité de remplissage limite, et pour lequel le dispositif à cycle thermodynamique n'est plus en mesure de fonctionner.

9. Procédé selon la revendication 8, d'après lequel dans le cas où l'instant de défaillance pronostiqué tombe avant le moment prévu pour un entretien standard du dispositif à cycle thermodynamique, on effectue un entretien séparé pour remédier à la fuite, avant l'instant de défaillance, et/ou d'après lequel dans le cas où l'instant de défaillance pronostiqué tombe sur le moment de l'entretien standard du dispositif à cycle thermodynamique ou après celui-ci, alors on effectue l'entretien pour remédier à la fuite en même temps que l'entretien standard.

10. Procédé selon l'une des revendications 1 à 9, d'après lequel la valeur de consigne du sous-refroidissement est prédéterminée pour différents états du dispositif à cycle thermodynamique.

11. Produit de programme d'ordinateur comprenant des parties de programme, qui, lorsqu'elles sont chargées dans un ordinateur, sont adaptées à la mise en oeuvre du procédé selon l'une des revendications 1 à 10.

12. Dispositif à cycle thermodynamique, notamment un dispositif ORC c'est-à-dire à cycle organique de Rankine, comprenant :

   un condenseur pour condenser un fluide de travail sous forme de vapeur ;
   un capteur de température pour mesurer une température d'un fluide de travail liquide sortant du condenseur ;
   des moyens pour déterminer un sous-refroidissement du fluide de travail dans le condenseur, le sous-refroidissement étant déterminé en tant que différence entre une température de condensation dans le condenseur et une température de fluide de travail liquide sortant du condenseur, et pour détecter une fuite dans le cas où le sous-refroidissement déterminé s'écarte d'une valeur de consigne du sous-refroidissement, ou bien dans le cas où une quantité de remplissage du fluide de travail dans le dispositif à cycle thermodynamique, qui a été déterminée à partir du sous-refroidissement déterminé, s'écarte d'une valeur de consigne de la quantité de remplissage.

13. Dispositif selon la revendication 12, dans lequel les moyens pour déterminer et pour détecter comprennent :

   un capteur de pression pour mesurer une pression de condensation, qui est notamment agencé dans le condenseur ; et
   un dispositif de traitement de données pour

      (i) déterminer une température de condensation dans le condenseur à partir de la pression de condensation mesurée,
      (ii) déterminer le sous-refroidissement du fluide de travail dans le condenseur en tant que différence entre une température de condensation dans le condenseur et une température de fluide de travail liquide sortant du condenseur, et
      (iii) détecter la fuite dans le cas où le sous-refroidissement déterminé s'écarte de la valeur de consigne du sous-refroidissement, ou bien dans le cas où la quantité de remplissage, qui a été déterminée à partir du sous-refroidissement déterminé, s'écarte de la valeur de consigne de la quantité de remplissage.

14. Dispositif selon la revendication 13, dans lequel le dispositif de traitement de données est conçu pour déterminer la quantité de remplissage du fluide de travail dans le dispositif à cycle thermodynamique, notamment une masse ou un volume du fluide de travail, à partir du sous-refroidissement ainsi déterminé, en utilisant une relation entre le sous-refroidissement et la quantité de remplissage.

15. Dispositif selon l'une des revendications 12 à 14, dans lequel le condenseur présente des surfaces de condenseur agencées verticalement, et dans lequel le condenseur est notamment un condenseur à tubes vertical, un condenseur à micro-canaux, un condenseur à mini ou micro-tubes, ou bien un condenseur à plaques vertical.

$T_{AD}$, $P_{AD}$

$P_{kond} = P_{AD}$

$T'_{kond} < T_{AD}$

$P_{kond}$

$T'_{kond} = T'_{kond} - \Delta T_{UK}$

FIG. 1

FIG. 2A

FIG. 2B

FIG. 2C

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010054736
- DE 102011117054
- DE 102009053390 B3
- EP 13189918 A